# EUROPEAN PATENT APPLICATION

(11) **EP 4 292 997 A1**
(43) Date of publication of application: **20.12.2023**
(21) Application number: 21931186.7
(22) Date of filing: 27.09.2021
(51) Int. Cl.: C04B 38/06

(54) **BASIC POROUS CERAMIC MATRIX AND PREPARATION METHOD THEREFOR, ELECTRONIC CIGARETTE ATOMIZATION CORE AND ELECTRONIC CIGARETTE**

(30) Priority: 19.03.2021 CN 202110297287
(71) Applicant: BYD Precision Manufacture Co., Ltd., Shenzhen Guangdong 518116 (CN)
(72) Inventor: CHEN, Ge, Shenzhen, Guangdong 518118 (CN); LIN, Xinping, Shenzhen, Guangdong 518118 (CN); TANG, Wei, Shenzhen, Guangdong 518118 (CN)
(74) Representative: Habermann, Hruschka & Schnabel
(86) International application number: PCT/CN2021/120903
(87) International publication number: WO 2022/193611

(57) **Abstract**

The present disclosure provides an alkaline porous ceramic matrix, which, based on the total weight of the alkaline porous ceramic matrix, includes: 45-98.1 parts of a ceramic powder, 0.4-14 parts of an oxide sintering aid, 1-15 parts of an alkali metal oxide, 0.0005-0.25 parts of an niobium oxide, and 0.1-10 parts of an yttrium-stabilized zirconium oxide. The present disclosure also provides a method for preparing the alkaline porous ceramic matrix, an electronic-cigarette vaporization core including the alkaline porous ceramic matrix, and an electronic cigarette.

## Description

### CROSS-REFERENCE TO RELATED APPLICATION

This application claims priority to and benefits of Chinese Patent Application No. 202110297287.9, filed on March 19, 2021 and titled "ALKALINE POROUS CERAMIC MATRIX AND PREPARATION METHOD THEREOF, ELECTRONIC-CIGARETTE VAPORIZATION CORE, AND ELECTRONIC CIGARETTE". The entire content of the above-referenced application is incorporated herein by reference.

### FIELD

The present disclosure relates to the technical field of electronic cigarette structures, and specifically to an alkaline porous ceramic matrix and a preparation method thereof, an electronic-cigarette vaporization core, and an electronic cigarette.

### BACKGROUND

In a conventional process of preparing an electronic cigarette, a heating element needs to be arranged on a porous ceramic matrix. The heating element may be a metal wire embedded in the porous ceramic matrix or may be an electrically conductive layer screen-printed on the porous ceramic matrix. In addition, electrode leads and the porous ceramic matrix need to be sintered together to make the heating element connected to electrodes. However, due to a high shrinkage rate of the electrode lead during sintering, if the toughness of the porous ceramic is insufficient, the shrinkage of the electrode lead will tear off the electrode lead from the junction with the ceramic green body. Therefore, how to ensure that the porous ceramic matrix has high bonding strength to a printed electrically conductive layer while meeting the requirements on toughness and strength is an urgent technical problem to be solved in the art.

### SUMMARY

To solve the above problem, the present disclosure provides an alkaline porous ceramic matrix and a preparation method thereof, an electronic-cigarette vaporization core, and an electronic cigarette.

To solve the above technical problems, the following technical solutions are employed in the present disclosure.

According to one aspect, the present disclosure provides an alkaline porous ceramic matrix, which, based on the total weight of the alkaline porous ceramic matrix, includes:

45-98.1 parts of a ceramic powder, 0.4-14 parts of an oxide sintering aid, 1-15 parts of an alkali metal oxide, 0.0005-0.25 parts of an niobium oxide, and 0.1-10 parts of an yttrium-stabilized zirconium oxide.

Optionally, in the alkaline porous ceramic matrix, the content of the alkali metal oxide is 1.6-12 parts, the content of the niobium oxide is 0.01-0.15 parts, and the content of the yttrium-stabilized zirconium oxide is 1-3 parts.

Optionally, based on the total weight of the alkaline porous ceramic matrix, the alkali metal oxide includes 0.5-8 parts of sodium oxide and 0.5-7 parts of potassium oxide.

Optionally, the niobium oxide includes niobium pentoxide.

Optionally, the yttrium-stabilized zirconium oxide has a specific surface area of 15-20 m²/g and a median particle size of 0.1-0.15 µm.

Optionally, based on the total weight of the alkaline porous ceramic matrix, the oxide sintering aid includes the following components in parts by weight:
0.2-7 parts of an oxide of magnesium and 0.2-7 parts of an oxide of calcium.

According to another aspect, the present disclosure provides a method for preparing the alkaline porous ceramic matrix, including the following operations:
mixing the ceramic powder, the oxide sintering aid, the alkali metal oxide, the niobium oxide, and the yttrium-stabilized zirconium oxide according to a ratio in parts by weight, ball milling and drying to obtain a composite powder;
mixing and molding the composite powder, a pore-forming agent, and a binder to obtain a green body; and
sintering the green body to remove the binder and the pore-forming agent and obtain the alkaline porous ceramic matrix.

According to another aspect, the present disclosure provides an alkaline porous ceramic matrix prepared by the above method.

According to another aspect, the present disclosure provides an electronic-cigarette vaporization core, including the alkaline porous ceramic matrix and an electrically conductive layer on a surface of the alkaline porous ceramic matrix.

According to another aspect, the present disclosure provides an electronic cigarette, including the electronic-cigarette vaporization core.

According to the alkaline porous ceramic matrix provided by the present disclosure, the structural strength of the porous ceramic body is ensured to prevent an electrode lead from falling off from the ceramic matrix due to shrinkage during sintering, and the bonding performance of the ceramic matrix to a printed electrically conductive coating is enhanced.

### DETAILED DESCRIPTION

To make the technical problem to be solved, the technical solution, and the beneficial effects of the present disclosure clearer, the present disclosure is described in further detail with reference to examples. It should be understood that the specific embodiments described herein are merely used for explaining the present disclosure, and are not intended to limit the present disclosure.

An embodiment of the present disclosure provides an alkaline porous ceramic matrix, which, based on the total weight of the alkaline porous ceramic matrix, includes:
45-98.1 parts of a ceramic powder, 0.4-14 parts of an oxide sintering aid, 1-15 parts of an alkali metal oxide, 0.0005-0.25 parts of an niobium oxide, and 0.1-10 parts of an yttrium-stabilized zirconium oxide.

It is found through experiments that when a porous ceramic matrix is prepared by using the alkali metal oxide, the niobium oxide, and the yttrium-stabilized zirconium oxide together in the preparation of a ceramic matrix for ceramic vaporization cores, the toughness and strength of the ceramic matrix are improved. In addition, when an electrically conductive coating is printed on the ceramic matrix by screen printing and sintered to obtain an electrically conductive layer, the bonding strength of the ceramic matrix to the electrically conductive layer is improved to a certain extent.

In a preferred embodiment, the content of the alkali metal oxide is 1.6-12 parts, the content of the niobium oxide is 0.01-0.15 parts, and the content of the yttrium-stabilized zirconium oxide is 1-3 parts.

According to an embodiment of the present disclosure, the yttrium-stabilized zirconium oxide is yttria-stabilized tetragonal zirconia.

In some embodiments, the alkali metal oxide includes the following components in parts by weight:
0.5-8 parts of sodium oxide and 0.5-7 parts of potassium oxide.

In a preferred embodiment, the amounts of sodium oxide and potassium oxide added are: 0.8-7 parts of sodium oxide and 0.8-5 parts of potassium oxide.

In some embodiments, the niobium oxide includes one or more of niobium monoxide, niobium dioxide, niobium trioxide, and niobium pentoxide.

In a preferred embodiment, the niobium oxide is selected from niobium pentoxide.

Niobium pentoxide is a high valence niobium oxide, is stable in nature, requires a lower preparation difficulty and costs compared with other niobium oxides, and can be prepared by burning niobium in air or dehydrating niobic acid.

In some embodiments, the yttrium-stabilized zirconium oxide has a specific surface area of 15-20 m²/g and a median particle size of 0.1-0.15 µm.

In some embodiments, the yttrium-stabilized zirconium oxide includes 2-4 mol% of yttria.

The yttrium-stabilized zirconium oxide forms a tetragonal phase in the sintering process, and yttria has a function of stabilizing the tetragonal phase, to improve mechanical properties. It should be noted that adding yttria alone has a limited improvement in preventing the electrode lead from falling off. In the technical solution of the present disclosure, the yttrium-stabilized zirconium oxide can achieve the material toughness required to prevent the electrode lead from falling off after the niobium oxide is added.

The ceramic powder functions to form a main skeleton in the alkaline porous ceramic matrix. In some embodiments, the ceramic powder includes one or more of an oxide of aluminum, an oxide of silicon, diatomite, feldspar, kaolin, montmorillonite, illite, cordierite, expanded perlite, and clay. The above materials have the advantages of firmness, wear resistance, high temperature resistance, ready availability of raw materials, and low costs, and ensure the strength and toughness of the porous ceramic when used as the ceramic powder.

In a preferred embodiment, the ceramic powder includes the following components in parts by weight:
10-50 parts of an oxide of aluminum and 35-85 parts of an oxide of silicon.

In a more preferred embodiment, the amounts of the oxide of aluminum and the oxide of silicon added are: 18-50 parts of an oxide of aluminum and 40-77 parts of an oxide of silicon.

The use of the oxide of aluminum and the oxide of silicon as the ceramic powder is more controllable in purity than the use of other materials, and therefore can improve the consistency of product quality. The oxide of aluminum is a high temperature ceramic and functions as a supporting skeleton. The oxide of silicon forms a low melting point glass phase at grain boundaries during sintering, to facilitate sintering and provide a bonding effect to the oxide of aluminum.

In some embodiments, based on the total weight of the alkaline porous ceramic matrix, the oxide sintering aid includes the following components in parts by weight:
0.2-7 parts of an oxide of magnesium and 0.2-7 parts of an oxide of calcium.

In a preferred embodiment, the amounts of the oxide of magnesium and the oxide of calcium added are: 0.5-5 parts of the oxide of magnesium and 0.5-5 parts of the oxide of calcium.

The oxide of magnesium added into the ceramic powder mainly functions as a microstructure stabilizer, and can refine crystal grains, greatly reduce the grain boundary energy difference, weaken the anisotropy of grain growth, and inhibit discontinuous grain growth.

The oxide of calcium and the oxide of magnesium are used in combination to obtain dense microstructures and uniform and fine grains.

Another embodiment of the present disclosure provides a method for preparing the alkaline porous ceramic matrix, including the following operations:
mixing the ceramic powder, the oxide sintering aid, the alkali metal oxide, the niobium oxide, and the yttrium-stabilized zirconium oxide according to a ratio in parts by weight, ball milling and drying to obtain a composite powder;
mixing and molding the composite powder, a pore-forming agent, and a binder to obtain a green body; and
sintering the green body to remove the binder and the pore-forming agent and obtain the alkaline porous ceramic matrix.

Specifically, taking molding by dry pressing as an example, the method for preparing the alkaline porous ceramic matrix includes the following operation steps.
1. First, the ceramic powder, the oxide sintering aid, the alkali metal oxide, the niobium oxide, and the yttrium-stabilized zirconium oxide are ball milled with water in a ball mill pot according to the ratio. Then the mixture is sand milled with a dispersant and water in a sand mill. Finally, the pore-forming agent and the binder are added and stirred to form a slurry to be sprayed.
2. The slurry is fed into a spray tower and spray dried to form a spherical powder with strong fluidity for dry pressing. Then the spherical powder is molded by dry pressing (on a 200-ton press with a hydraulic pressure of 8 MPa).
3. The molded powder is sintering at 1000-1300°C for 1-2 h, ground and polished to obtain a final sample.

It should be noted that molding by dry pressing is merely a preferred embodiment of the alkaline porous ceramic matrix, is used for illustrating the present disclosure, and is not intended to limit the present disclosure. In some other embodiments, those skilled in the art can adopt other existing molding methods to prepare the alkaline porous ceramic matrix, such as isostatic pressing, injection molding, and hot die-casting.

Another embodiment of the present disclosure provides an alkaline porous ceramic matrix prepared by the above method.

Another embodiment of the present disclosure provides an electronic-cigarette vaporization core. The electronic-cigarette vaporization core includes the alkaline porous ceramic matrix, an electrically conductive layer, and an electrode lead. The electrically conductive layer is located on a surface of the alkaline porous ceramic matrix. The electrode lead is inserted into the alkaline porous ceramic matrix and is electrically connected to the electrically conductive layer. The electrically conductive layer is obtained by screen-printing an electrically conductive slurry on the surface of the alkaline porous ceramic matrix and sintering.

During preparation of the electronic-cigarette vaporization core, the electrically conductive layer is formed by screen printing of the electrically conductive slurry, and the electrode lead is inserted into a reserved vaporization core hole on the alkaline porous ceramic matrix and then sintered and fixed in a reducing gas furnace using a reducing gas selected from ammonia gas or hydrogen gas.

When the alkaline porous ceramic matrix is used in the electronic-cigarette vaporization core, the bonding strength between the electrode lead and the alkaline porous ceramic matrix can be effectively improved in the preparation process, to prevent the electrode lead from falling off during sintering, ensure the screen printing effect, and improve the bonding force of the electrically conductive layer.

Another embodiment of the present disclosure provides an electronic cigarette, including the electronic-cigarette vaporization core.

The present disclosure is further described below with reference to examples.

### Example 1

An alkaline porous ceramic matrix having the following composition was provided:
Powder: 25 g of alumina, 66.48 g of silica, 1.5 g of magnesium oxide, 3 g of calcium oxide, 1 g of sodium oxide, 1 g of potassium oxide, 0.02 g of niobium pentoxide, and 2 g of 3 mol% yttrium-stabilized zirconia.

Pore-forming agent: 26 g of polymethyl methacrylate (PMMA).

10 g of a polyvinyl alcohol (PVA) binder.

100 g of water.

The specific preparation method is as follows.

First, the powder was mixed in a ball mill pot for 2 h, and after being discharged and dried, was sintered in a sintering furnace at 1000°C for 1 h. The sintered powder was pulverized, followed by addition of 26 g of the pore-forming agent PMMA, 10 g of the PVA binder, and 100 g of water, mixing with stirring for 2 h, and spray drying. The dried powder was molded into a green body in the shape of an electronic-cigarette vaporization core by dry pressing, and then sintered in a furnace at 1140°C for 1.5 h. An electrically conductive slurry was screen-printed on the green body, followed by insertion of an electrode lead and sintering in a hydrogen furnace, to obtain an electronic-cigarette vaporization core. The sintering temperature was 1050°C.

### Example 2

An alkaline porous ceramic matrix having the following composition was provided:
Powder: 18 g of alumina, 73.48 g of silica, 1.5 g of magnesium oxide, 3 g of calcium oxide, 0.5 g of sodium oxide, 0.5 g of potassium oxide, 0.02 g of niobium pentoxide, and 2 g of 3 mol% yttrium-stabilized zirconia.

Pore-forming agent: 26 g of PMMA.

10 g of a PVA binder.

100 g of water.

The specific preparation method is as follows.

First, the powder was mixed in a ball mill pot for 2 h, and after being discharged and dried, was sintered in a sintering furnace at 1000°C for 1 h. The sintered powder was pulverized, followed by addition of 26 g of the pore-forming agent PMMA, 10 g of the PVA binder, and 100 g of water, mixing with stirring for 2 h, and spray drying. The dried powder was molded into a green body in the shape of an electronic-cigarette vaporization core by dry pressing, and then sintered in a furnace at 1140°C for 1.5 h. An electrically conductive slurry was screen-printed on the green body, followed by insertion of an electrode lead and sintering in a hydrogen furnace, to obtain an electronic-cigarette vaporization core. The sintering temperature was 1050°C.

### Example 3

An alkaline porous ceramic matrix having the following composition was provided:
Powder: 50 g of alumina, 41.48 g of silica, 1.5 g of magnesium oxide, 3 g of calcium oxide, 2 g of sodium oxide, 2 g of potassium oxide, 0.02 g of niobium pentoxide, and 2 g of 3 mol% yttrium-stabilized zirconia.

Pore-forming agent: 26 g of PMMA.

10 g of a PVA binder.

100 g of water.

The specific preparation method is as follows.

First, the powder was mixed in a ball mill pot for 2 h, and after being discharged and dried, was sintered in a sintering furnace at 1000°C for 1 h. The sintered powder was pulverized, followed by addition of 26 g of the pore-forming agent PMMA, 10 g of the PVA binder, and 100 g of water, mixing with stirring for 2 h, and spray drying. The dried powder was molded into a green body in the shape of an electronic-cigarette vaporization core by dry pressing, and then sintered in a furnace at 1235°C for 1.5 h. An electrically conductive slurry was screen-printed on the green body, followed by insertion of an electrode lead and sintering in a hydrogen furnace, to obtain an electronic-cigarette vaporization core. The sintering temperature was 1050°C.

### Example 4

An alkaline porous ceramic matrix having the following composition was provided:
Powder: 25 g of alumina, 67.49 g of silica, 1.5 g of magnesium oxide, 3 g of calcium oxide, 5 g of sodium oxide, 5 g of potassium oxide, 0.01 g of niobium pentoxide, and 1 g of 3 mol% yttrium-stabilized zirconia.

Pore-forming agent: 26 g of PMMA.

10 g of a PVA binder.

100 g of water.

The specific preparation method is as follows.

First, the powder was mixed in a ball mill pot for 2 h, and after being discharged and dried, was sintered in a sintering furnace at 1000°C for 1 h. The sintered powder was pulverized, followed by addition of 26 g of the pore-forming agent PMMA, 10 g of the PVA binder, and 100 g of water, mixing with stirring for 2 h, and spray drying. The dried powder was molded into a green body in the shape of an electronic-cigarette vaporization core by dry pressing, and then sintered in a furnace at 1170°C for 1.5 h. An electrically conductive slurry was screen-printed on the green body, followed by insertion of an electrode lead and sintering in a hydrogen furnace, to obtain an electronic-cigarette vaporization core. The sintering temperature was 1050°C.

### Example 5

An alkaline porous ceramic matrix having the following composition was provided:
Powder: 25 g of alumina, 65.35 g of silica, 1.5 g of magnesium oxide, 3 g of calcium oxide, 7 g of sodium oxide, 8 g of potassium oxide, 0.15 g of niobium pentoxide, and 3 g of 3 mol% yttrium-stabilized zirconia.

Pore-forming agent: 26 g of polymethyl methacrylate (PMMA).

10 g of a PVA binder.

100 g of water.

The specific preparation method is as follows.

First, the powder was mixed in a ball mill pot for 2 h, and after being discharged and dried, was sintered in a sintering furnace at 1000°C for 1 h. The sintered powder was pulverized, followed by addition of 26 g of the pore-forming agent PMMA, 10 g of the PVA binder, and 100 g of water, mixing with stirring for 2 h, and spray drying. The dried powder was molded into a green body in the shape of an electronic-cigarette vaporization core by dry pressing, and then sintered in a furnace at 1100°C for 1.5 h. An electrically conductive slurry was screen-printed on the green body, followed by insertion of an electrode lead and sintering in a hydrogen furnace, to obtain an electronic-cigarette vaporization core. The sintering temperature was 1050°C.

### Comparative Example 1

A porous ceramic matrix having the following composition was provided:
Powder: 25 g of alumina, 66.48 g of silica, 1.5 g of magnesium oxide, 3 g of calcium oxide, 2 g of bismuth oxide, 0.02 g of niobium pentoxide, and 2 g of 3 mol% yttrium-stabilized zirconia.

Pore-forming agent: 26 g of PMMA.

10 g of a PVA binder.

100 g of water.

The specific preparation method is as follows.

First, the powder was mixed in a ball mill pot for 2 h, and after being discharged and dried, was sintered in a sintering furnace at 1000°C for 1 h. The sintered powder was pulverized, followed by addition of 26 g of the pore-forming agent PMMA, 10 g of the PVA binder, and 100 g of water, mixing with stirring for 2 h, and spray drying. The dried powder was molded into a green body in the shape of an electronic-cigarette vaporization core by dry pressing, and then sintered in a furnace at 1070°C for 1.5 h. An electrically conductive slurry was screen-printed on the green body, followed by insertion of an electrode lead and sintering in a hydrogen furnace, to obtain an electronic-cigarette vaporization core. The sintering temperature was 1050°C.

### Comparative Example 2

A porous ceramic matrix having the following composition was provided:
Powder: 25 g of alumina, 66.48 g of silica, 1.5 g of magnesium oxide, 3 g of calcium oxide, 1 g of sodium oxide, 1 g of potassium oxide, and 2 g of 3 mol% yttrium-stabilized zirconia.

Pore-forming agent: 26 g of PMMA.

10 g of a PVA binder.

100 g of water.

The specific preparation method is as follows.

First, the powder was mixed in a ball mill pot for 2 h, and after being discharged and dried, was sintered in a sintering furnace at 1000°C for 1 h. The sintered powder was pulverized, followed by addition of 26 g of the pore-forming agent PMMA, 10 g of the PVA binder, and 100 g of water, mixing with stirring for 2 h, and spray drying. The dried powder was molded into a green body in the shape of an electronic-cigarette vaporization core by dry pressing, and then sintered in a furnace at 1140°C for 1.5 h. An electrically conductive slurry was screen-printed on the green body, followed by insertion of an electrode lead and sintering in a hydrogen furnace, to obtain an electronic-cigarette vaporization core. The sintering temperature was 1050°C.

### Comparative Example 3

A porous ceramic matrix having the following composition was provided:
Powder: 25 g of alumina, 66.48 g of silica, 1.5 g of magnesium oxide, 3 g of calcium oxide, 1 g of sodium oxide, 1 g of potassium oxide, and 0.02 g of niobium pentoxide.

Pore-forming agent: 26 g of PMMA.

10 g of a PVA binder.

100 g of water.

The specific preparation method is as follows.

First, the powder was mixed in a ball mill pot for 2 h, and after being discharged and dried, was sintered in a sintering furnace at 1000°C for 1 h. The sintered powder was pulverized, followed by addition of 26 g of the pore-forming agent PMMA, 10 g of the PVA binder, and 100 g of water, mixing with stirring for 2 h, and spray drying. The dried powder was molded into a green body in the shape of an electronic-cigarette vaporization core by dry pressing, and then sintered in a furnace at 1170°C for 1.5 h. An electrically conductive slurry was screen-printed on the green body, followed by insertion of an electrode lead and sintering in a hydrogen furnace, to obtain an electronic-cigarette vaporization core. The sintering temperature was 1050°C.

### Performance test

The following performance tests were carried out on the electronic-cigarette vaporization cores of Examples 1-5 and Comparative Example 1-3.

Thermal conductivity test: The thermal conductivities of the electronic-cigarette vaporization cores were measured using a thermal conductivity meter in accordance with the standard ASTM 518.

Strength test: The strength of the electronic-cigarette vaporization cores was tested using a universal tester in accordance with the standard GB/T 6569-86.

Drawing force test: The electronic-cigarette vaporization cores were fixed. The electrode leads were each fixed by a force gauge. The electrode leads were pulled out of the electronic-cigarette vaporization cores, and the drawing forces used were recorded.

Test of bonding strength between the ceramic matrix and the electrically conductive layer: The electronic-cigarette vaporization cores were each heated at 60°C for 2s and then cooled at 10°C for 5s, i.e., subjected to one cold and hot shock test. When the electrically conductive layer fell off, the number of cold and hot shock tests performed on the electronic-cigarette vaporization core was recorded.

The test results obtained are shown in Table 1.

**Table 1**

| Item | Strength (MPa) | Drawing force (N) | Thermal conductivity (W/(mK)) | Number of times of cold and hot shock |
|---|---|---|---|---|
| Example 1 | 52 | 11 | 1.3 | 12 |
| Example 2 | 47 | 9 | 1.1 | 7 |
| Example 3 | 49 | 10 | 1.5 | 10 |
| Example 4 | 45 | 8 | 1.2 | 6 |
| Example 5 | 50 | 10 | 1.4 | 11 |
| Comparative Example 1 | 49 | 9 | 1.2 | 5 |
| Comparative Example 2 | 36 | 4 | 1.3 | 11 |
| Comparative Example 3 | 30 | 4 | 1.1 | 10 |

It can be known from the comparison of the test results of Examples 1-5 and Comparative Example 1 that, compared with the porous ceramic matrix with no alkali metal oxide added, the alkaline porous ceramic matrix obtained by adding the alkali metal oxide, the niobium oxide, and the yttrium-stabilized zirconium oxide according to the present disclosure can withstand a larger number of cold and thermal shock tests, indicating that the combination of the alkali metal oxide, the niobium oxide, and the yttrium-stabilized zirconium oxide can improve the bonding strength between the alkaline porous ceramic matrix and the electrically conductive layer.

It can be known from the comparison of the test results of Examples 1-5 and Comparative Examples 2 and 3 that the addition of the alkali metal oxide, the niobium oxide, and the yttrium-stabilized zirconium oxide can effectively improve the material strength and toughness of the alkaline porous ceramic matrix, thereby effectively improving the bonding strength between the alkaline porous ceramic matrix and the electrode lead, and prevent the electrode lead from falling off; and the absence of the niobium oxide or the yttrium-stabilized zirconium oxide leads to a decrease in the strength of the alkaline porous ceramic matrix, resulting in falling of the electrode lead.

The foregoing descriptions are merely optional embodiments of the present disclosure, but are not intended to limit the present disclosure. Any modification, equivalent replacement, or improvement made within the spirit and principle of the present disclosure shall fall within the protection scope of the present disclosure.

## Claims

1. An alkaline porous ceramic matrix, comprising, based on the total weight of the alkaline porous ceramic matrix:
45-98.1 parts of a ceramic powder, 0.4-14 parts of an oxide sintering aid, 1-15 parts of an alkali metal oxide, 0.0005-0.25 parts of an niobium oxide, and 0.1-10 parts of an yttrium-stabilized zirconium oxide.

2. The alkaline porous ceramic matrix according to claim 1, wherein in the alkaline porous ceramic matrix, the content of the alkali metal oxide is 1.6-12 parts, the content of the niobium oxide is 0.01-0.15 parts, and the content of the yttrium-stabilized zirconium oxide is 1-3 parts.

3. The alkaline porous ceramic matrix according to claim 1 or 2, wherein based on the total weight of the alkaline porous ceramic matrix, the alkali metal oxide comprises 0.5-8 parts of sodium oxide and 0.5-7 parts of potassium oxide.

4. The alkaline porous ceramic matrix according to any one of claims 1 to 3, wherein the niobium oxide comprises niobium pentoxide.

5. The alkaline porous ceramic matrix according to any one of claims 1 to 4, wherein the yttrium-stabilized zirconium oxide has a specific surface area of 15-20 m²/g and a median particle size of 0.1-0.15 µm.

6. The alkaline porous ceramic matrix according to any one of claims 1 to 5, wherein based on the total weight of the alkaline porous ceramic matrix, the oxide sintering aid comprises the following components in parts by weight:
0.2-7 parts of an oxide of magnesium and 0.2-7 parts of an oxide of calcium.

7. A method for preparing the alkaline porous ceramic matrix according to any one of claims 1 to 6, comprising the following operations:
mixing the ceramic powder, the oxide sintering aid, the alkali metal oxide, the niobium oxide, and the yttrium-stabilized zirconium oxide according to a ratio in parts by weight, ball milling and drying to obtain a composite powder;
mixing and molding the composite powder, a pore-forming agent, and a binder to obtain a green body; and
sintering the green body to remove the binder and the pore-forming agent to obtain the alkaline porous ceramic matrix.

8. An alkaline porous ceramic matrix, prepared by the method according to claim 7.

9. An electronic-cigarette vaporization core, comprising the alkaline porous ceramic matrix according to any one of claims 1 to 6 and 8 and an electrically conductive layer on a surface of the alkaline porous ceramic matrix.

10. An electronic cigarette, comprising the electronic-cigarette vaporization core according to claim 9.
